# EUROPEAN PATENT APPLICATION

(11) **EP 2 026 525 A1**
(43) Date of publication of application: **18.02.2009**
(21) Application number: 07253913.3
(22) Date of filing: 03.10.2007
(51) Int. Cl.: H04L 29/06, H04M 1/725

(54) **Communications method and apparatus for data storage**

(30) Priority: 13.08.2007 MY 0701343
(71) Applicant: British Telecommunications Public Limited Company, London EC1A 7AJ (GB)
(72) Inventor: The designation of the inventor has not yet been filed
(74) Representative: Wilson, Peter David

(57) **Abstract**

A communications terminal may request that a communications session be opened (for example by calling an emergency number). The terminal backs up data held within the terminal, which may be compressed and/or encrypted, before being transmitted to a server via a communication session which is established in response to the terminal's request.

## Description

The present invention relates to a method of establishing a connection between a client terminal and a server and in particular to a method of establishing a connection between a client terminal and a server in an emergency.

In the event of an emergency, and in particular for large scale emergencies, there is significant pressure on communication networks. This can prevent users from calling the emergency services. In addition, it is very difficult to for users to send multimedia data (such as photos or video) to the emergency services which may allow the emergency services to address an emergency situation.

According to a first aspect of the present invention there is provided a method of establishing a communications session, the method comprising the steps of: a) sending a request for a communication session from a client terminal to a server; b) creating a data archive within the client terminal; c) establishing a communication session between the client terminal and the server in response to the request sent in step a); and d) transmitting the data archive from the client terminal to the server. In step b), the data archive may comprise compressed data and/or the data archive may comprise encrypted data. Preferably step a) comprises a call to a number associated with an emergency service. In step c), the communication session may be established in response to Session Initiation Protocol (SIP) data transmitted by the client terminal when the emergency call is made. The location of the client terminal may be identified.

According to a second aspect of the present invention there is provided a computer program product, comprising computer executable code for performing a method according to any of Claims 1 to 6.

According to a third aspect of the present invention there is provided a client terminal comprising a backup module, the client terminal being configured, in use, to i) send a request for a communication session from a client terminal to a server; ii) invoke the backup module to create a data archive within the client terminal; iii) in response to the establishment of a communication session between the client terminal and the server in response to the request sent in step i), transmitting the data archive from the client terminal to the server. The client terminal may further comprise a memory storage means, the memory storage means being configured to store the data archive. The client terminal may also further comprise one or more environmental sensors. The client terminal may be configured to send a request for a communication session in response to the output of one or more of the environmental sensors.

By allocating a reserved communications session to the user terminal it is possible for user data to be backed up to a secure, network based server. This backed-up data can be access by the user from a further terminal (e.g. a PC) and/or the data may also be made available to the emergency services such that the emergency services may be better placed to tackle an emergency situation.

The invention will be described with reference to the following Figures, which are provided by way of explanation only, in which:
Figure 1 shows a schematic depiction of a client terminal for use in a communications network according to the present invention;
Figure 2 shows a schematic depiction of a communications network according to the present invention which is in communication with the mobile terminal; and
Figure 3 shows a schematic depiction of the process executed by a network according to the present invention.

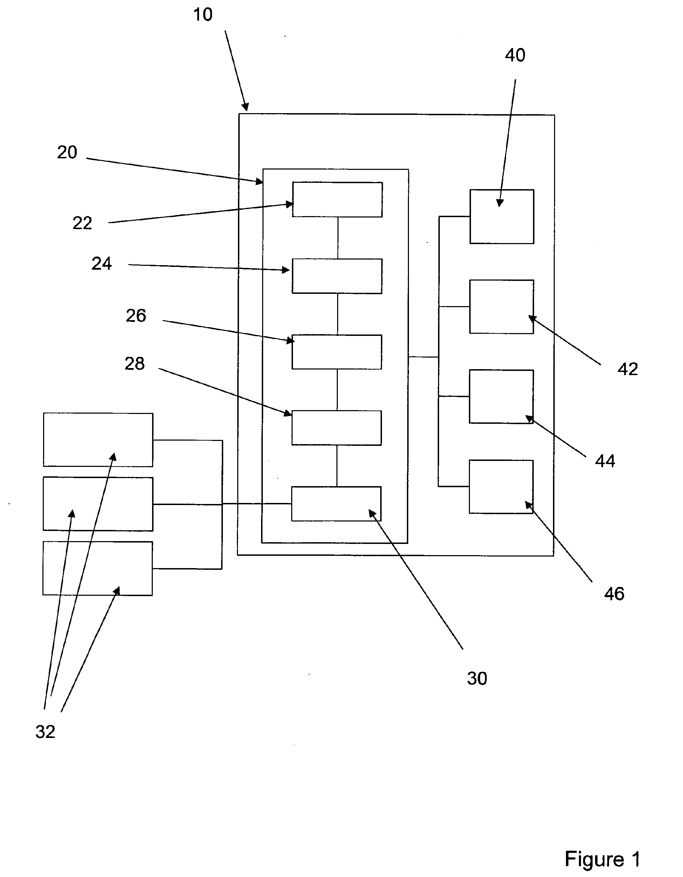

Figure 1 shows a schematic depiction of a client terminal 10 for use in a communications network according to the present invention. The client terminal comprises a SIM card 42, client terminal storage means 44, battery 46 and further hardware components 40 conventionally found in a client terminal (wireless interface, display screen, processor unit, etc. It will be understood that these further hardware components are not material to the operation of the present invention).

The client terminal 10 further comprises an emergency client 20 which comprises an emergency session manager module 22, client backup module 24, client memory means 26 and client battery 28. The emergency session manager module and the client backup module are software modules which can be run by the client terminal. The operation of the emergency session manager module and the client backup module will be described in detail below.

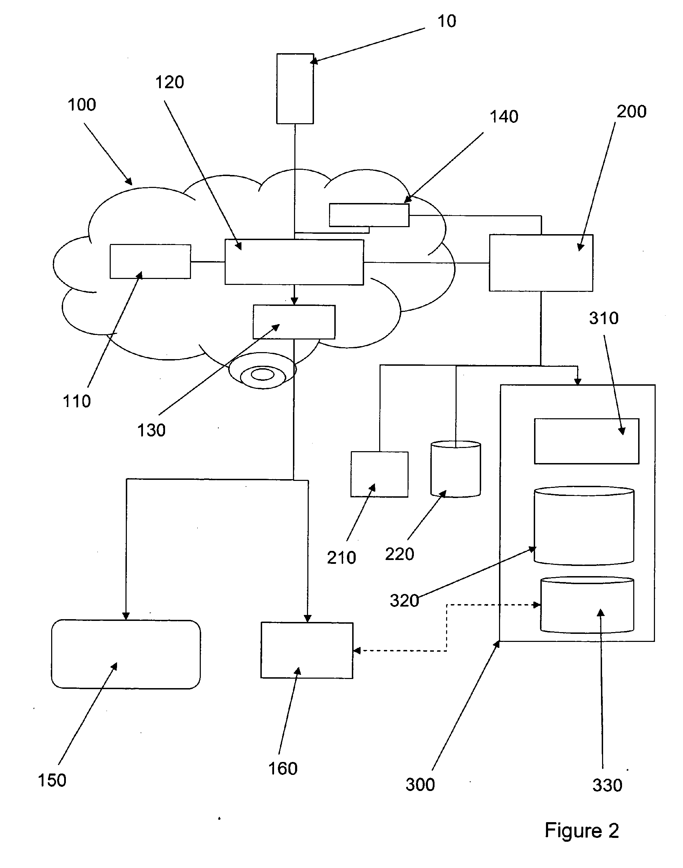

Figure 2 shows a schematic depiction of a communications network 100 according to the present invention which is in communication with the mobile terminal 10. The network 100 is preferably an IP Multimedia Subsystem (IMS) network, which is able to provide Quality of Service (QoS) assurance to transport real-time data. This allows a network operator to offer personalised, interactive and multimedia services to any device, and to any location. Emergency calls to the network from mobile devices are routed to a Proxy Call Session Control Function (P-CSCF) 120. If the terminal is a conventional terminal and thus not capable of supporting the present invention then an emergency call will be routed to a conventional emergency centre 150, via a emergency Call Session Control Function (E-CSCF) 130. If the terminal is capable of supporting the present invention then the call is routed to an IMS Application Server 200. The IMS Application Server is in communication with a location identifier 140, an emergency server 300, IMS media server 210 and a Home Subscriber System (HSS) 220. The emergency server 300 comprises an emergency server backup module 310, emergency server database 320 and emergency server mailbox 330.

Referring to both Figures 1 & 2, the operation of the client terminal 10 and the communications network 100 will now be described in more detail. The emergency session manager module is a software module that is run by the client terminal. When the emergency session manager module detects that the user wishes to initiate an emergency call (for example by detecting that the appropriate number (999, 112, 911 etc.), then the emergency session manager module adds an enhanced emergency identifier into the SIP (Session Initiation Protocol) invite request. The emergency session manager module also initiates the client backup module 24. The client backup module is a further software module that is run by the client terminal. The client backup module functions as a 'black box' and can be configured to search and copy all types of data stored within the client terminal: for example text (most recent sent and/or received SMS, phone contacts, recent received numbers, recent dialled numbers, contact details, etc.), graphics (most recent photos taken, photos received, MMS, etc.); and video (videos that have been recently watched, captured, received, etc). During the backup process, all these data will be encoded, compressed and encrypted into a format known, for example, as *IMS_SOS_format.* Once the backup process is done, the final processed data is known as *IMS_SOS_data* will be kept in the client memory means while waiting for an upload session to start.

During the upload session (see below), the client backup module will transfer the *IMS_SOS_data* from client memory means to a remote emergency mailbox 330. To save time in the event of an emergency, the client backup module may be configured to periodically the data from the client terminal to the client memory means (either independently or in response to a prompt from the emergency session manager module). The client memory means may be a built-in fixed storage means (eg: microdrive, RAM) or a removable storage means (eg: Compact Flash, MMC, SD, XD cards). In an alternative embodiment, the client memory means may be a partitioned region of the client terminal storage means 44, which is exclusively reserved for storing the *IMS_SOS_data.* The client battery is a small rechargeable battery (or capacitor or similar electrical power storage means) that is used to power the emergency client once an emergency session has been initiated. It should comprise sufficient power to allow the emergency client to complete an emergency session. It is preferred that the client battery is entirely independent and separate from the main battery 46 of the client terminal. In an alternative embodiment, the power for the execution of an emergency session is provided by the main battery 46 of the client terminal. In such an alternative, the power management software of the client terminal may be modified to retain sufficient power such that an emergency session can be carried out.

When a client terminal 10 makes a emergency call then the call is routed to a Proxy-CSCF (Call Session Control Function) 120, which intercepts the emergency call request and will check for an enhanced emergency identifier. If no such identifier is found (i.e. the call is a conventional emergency call then the call is transferred to an Emergency-CSCF 130, which ensures that emergency requests are routed to the correct emergency centre (or Public Safety Answering Point (PSAP)) 150. The emergency centre answers the call and prompts the appropriate emergency service(s) to be routed to the appropriate location.

If the P-CSCF detects an enhanced emergency identifier then the P-CSCF will retrieve the client terminal location data from the LRF and forward the request before forward it the emergency server 300. The Location Retrieval Function (LRF) 140 determines the location of the client terminal and this location data is passed to the E-CSCF (via the P-CSCF). The LRF may interact with, or comprise, other types of location server functions in order to obtain the location of the client terminal. If the client terminal comprises GPS functionality (or similar location identification functionality), then location data may be forwarded to the E-CSCF (for example in a SIP invite request or similar field).

The emergency server 300 comprises an emergency server backup module 310 which is a software module that is able to receive voice, video and other data from an IMS network. If necessary, the data can be encoded, compressed and encrypted into *IMS_SOS_format.* Once the backup process is completed, the *IMS_SOS_data* can be uploaded to the emergency server mailbox 330. The emergency server mailbox is used to store *IMS_SOS_data,* whether generated by the client terminal or the emergency server backup module. The emergency server database 320 is used to store client service profiles, which preferably comprises emergency mailbox settings and SOS contacts. All user profiles and settings related to enhanced emergency service (whether for network, client terminal(s) or client account) are stored in the emergency server database.

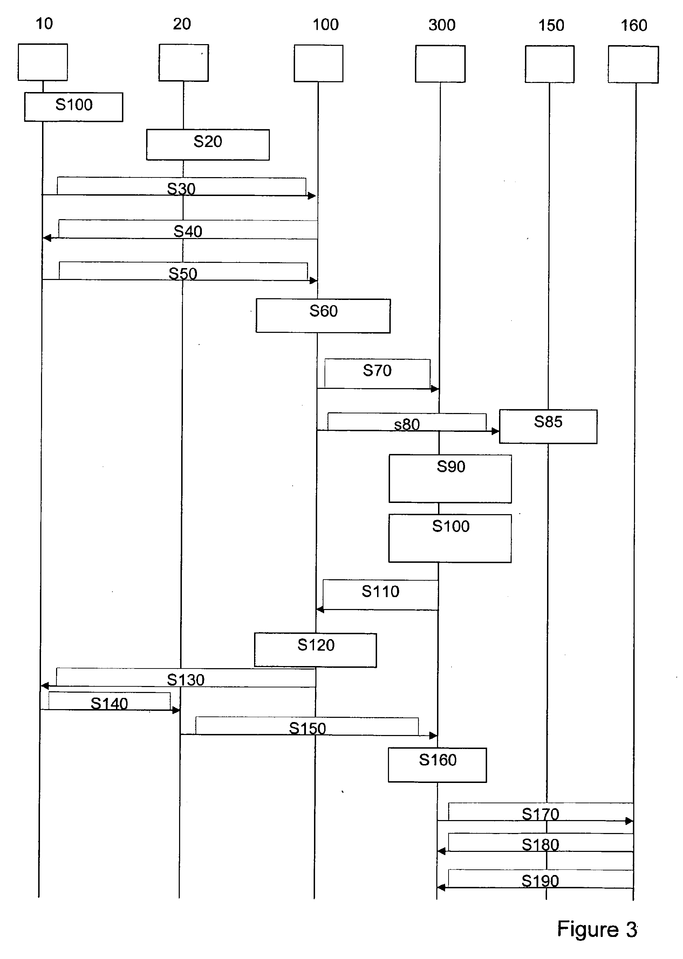

Referring to Figure 3, which shows a schematic depiction of the process executed by a network according to the present invention, the end-to-end process will now be described. At Step S10, the user initiates an emergency call, prompting the client terminal 10 to initiate the emergency client 20. At step S20 the client backup module begins the data backup process to create an *IMS_data_file* for the emergency session. Subsequently, at Step S30 the client terminal requests location information from the network according to conventional location retrieval procedures (for example 3GPP TS 23.167 Technical Specification: IP Multimedia Subsystem (IMS) emergency sessions). The location information is retrieved at step S40, preferably along with routing data and any other parameters that may be required by the emergency services (eg: SIP URI, Tel URI, etc) from the LRF.

The client terminal (step S50) inserts the received location information (and the other information received in S40) in an emergency SIP INVITE request. The IMS core network can transport the client terminal location information and if for some reason the client terminal is not able to supply any location information then the P-CSCF may request location information from the LRF and insert the location information into the INVITE request received from the client terminal.

The P-CSCF in the IMS network 100 intercepts the SIP message (step S60) and inspects the Enhanced Emergency Service Identifier attribute. If the attribute value is YES, it will forward the message to emergency server 300 for further processing (S70). If the Enhanced Emergency Service Identifier Attribute is NO, the request will be forwarded to an Emergency Centre 150 in accordance with the normal procedures for emergency sessions (S80).

If the emergency server 300 receives a request for enhanced emergency session, it creates an emergency mailbox account for the emergency session (step S90). The mailbox settings for the specific user will be based on a profile retrieved from the emergency server database. At the same time, a session is initiated to an IMS media server 210 to retrieve the most recent voice/video conversation made to/from the terminal (S100). Then, the emergency server backup module will encode, compress and encrypt these data into *IMS_SOS_format,* and transfer the data to the same remote emergency mailbox. The emergency server also (step S110) sends a request to the IMS network to allocate a priority channel to the emergency session. The IMS core will implement an adaptive resource reservation scheme to ensure that a high-speed and guaranteed bandwidth channel is allocated to the emergency session (step S120). When the channel is ready, the E-CSCF transmits an acknowledgement message to the client terminal (step S130).

When the client terminal receives the acknowledgement message (step S140), the client terminal prompts the client backup module to upload the *IMS_SOS_data* upload to the emergency server mailbox (step S150). At this stage, the emergency server should have, stored in an emergency mailbox:
(i) data backup from the client terminal (most recent SMS, MMS, received/dialled numbers, etc);
(ii) data (voice/video etc.) from network-based server(s); and
(iii) the most recent location information of the client terminal,.

The emergency server can then (step 160) retrieve an emergency contact list from the emergency server database, match each contact with user profile from HSS, and attempt to make contact based on most recent presence information available. For example, if the first contact is seen as online on his mobile, the emergency system may initiate a SOS notification to the mobile number (steps S170 & S180). Once an emergency session has been established, then an emergency centre, PSAP or Emergency contact may be able to retrieve the *IMS_SOS_data* from emergency mailbox (step S190). Access to the *IMS_SOS_data* may be controlled or limited via user preferences.

In an alternative embodiment of the present invention, the client terminal may further comprise a plurality of environmental sensors 32 and a sensor management module 30. The sensors may monitor temperature, impact, smoke, biological or chemical agents, etc. The sensors may be third generation Micro-Electro-Mechanical Systems (MEMS) sensors which can be configured to auto-trigger an emergency session should its indicator reach or exceed certain threshold. Based on the sensor type, sensor management module can determine which emergency centre to contact. For example should the trigger is initiated from a temperature sensor, the emergency call will be made to the nearest Fire Brigade PSAP.

Whilst the performance of the present invention is likely to be most efficient if the emergency client 20 comprises a dedicated client memory means 26 and client battery 28, it will be understood that through the use of the client terminal's memory means and battery by the emergency client, then the emergency client will comprise only software components. In such a case, the relevant software could be bundled with the software for the client terminal. Alternatively, it may be pushed to users (i.e. as the payload of a MMS or on a DVD or CD) or be made available for download by users. This may assist in the uptake of the functionality required to use the present invention. By the use of such software, the client terminal could be a conventional device such as a PDA, mobile phone, Blackberry (RTM), etc., having update software. The client terminal may also be a fixed line terminal, for example a domestic phone or public payphone. If a dedicated client terminal were to be provided, the client terminal preferably comprises one or more of a dedicated client memory means 26 and client battery 28, one or more sensors or a sensor management module. The client terminal may comprise a body which is substantially water-proof, fire-proof or able to resist high-energy impacts. It should be understood that a method according to the present invention may be used in other contexts than emergencies. This would enable users to be able to backup the contents of their mobile terminals and to then access the backup from a different terminal or PC.

## Claims

1. A method of establishing a communications session, the method comprising the steps of:
a) sending a request for a communication session from a client terminal to a server;
b) creating a data archive within the client terminal;
c) establishing a communication session between the client terminal and the server in response to the request sent in step a); and
d) transmitting the data archive from the client terminal to the server.

2. A method according to Claim 1, wherein in step b), the data archive comprises compressed data.

3. A method according to Claim 1 or claim 2, wherein in step b), the data archive comprises encrypted data.

4. A method according to any preceding claim, wherein step a) comprises a call to a number associated with an emergency service.

5. A method according to Claim 4, wherein in step c), the communication session is established in response to Session Initiation Protocol (SIP) data transmitted by the client terminal when the emergency call is made.

6. A method according to claims 4 or 5, wherein the location of the client terminal is identified.

7. A computer program product, comprising computer executable code for performing a method according to any of Claims 1 to 6.

8. A client terminal comprising a backup module, the client terminal being configured, in use, to
i) send a request for a communication session from a client terminal to a server;
ii) invoke the backup module to create a data archive within the client terminal;
iii) in response to the establishment of a communication session between the client terminal and the server in response to the request sent in step i), transmitting the data archive from the client terminal to the server.

9. A client terminal according to Claim 8, further comprising a memory storage means, the memory storage means being configured to store the data archive.

10. A client terminal according to Claim 8 or Claim 9, further comprising one or more environmental sensors.

11. A client terminal according to Claim 10, wherein the terminal is configured to send a request for a communication session in response to the output of one or more of the environmental sensors.
